# EUROPEAN PATENT SPECIFICATION

(11) **EP 1 355 755 B1**
(45) Date of publication and mention of the grant of the patent: **05.12.2007**
(21) Application number: 02734833.3
(22) Date of filing: 16.01.2002
(51) Int. Cl.: B23C 5/20

(54) **CUTTING TOOL AND CUTTING INSERTS**
SCHNEIDWERKZEUG UND SCHNEIDEINSÄTZE
OUTIL DE COUPE ET PIECES DE COUPE RAPPORTEES

(30) Priority: 26.01.2001 SE 0100211
(43) Date of publication of application: 29.10.2003
(73) Proprietor: Seco Tools AB, 737 82 Fagersta (SE)
(72) Inventor: SVENSSON, Mikael, S-737 33 Fagersta (SE)
(74) Representative: Taquist, Henrik Lennart Emanuel
(86) International application number: PCT/SE2002/000073
(87) International publication number: WO 2002/058871

(56) References cited:
- EP-A1- 0 457 488
- DE-A1- 4 411 475
- US-A- 4 632 607
- US-A- 4 966 500
- US-A- 5 718 540

## Description

The present invention relates to a milling insert and a milling tool in accordance with the preambles of the independent claims (see, for example, US-A-5718540).

### Background of the invention

US-A-4,966,500 shows a milling cutter having hexagonal cutting inserts. Each cutting insert has a main cutting edge, an end cutting edge and a radially internal cutting edge. The radially internal cutting edge is intended to cut during ramping of the work piece.

US-A-4,632,607 shows a square milling insert having four pairs of cutting edges and having protruding secondary cutting edges. The milling tool produces perpendicular corners in the work piece.

The main cutting edges of the prior cutting inserts are sensitive to impacts and vibrations.

### Objects of the invention

An object of the present invention is to provide a milling insert and a milling tool for foremost roughing which overcomes the above-captioned drawbacks.

Another object of the present invention is to provide a durable milling insert.

Still another object of the present invention is to provide a milling insert that comprises impact protection in relation to the work piece.

These objects can be achieved by a milling insert according to claim 1.

### Brief description of the drawings

These objects and advantages of the invention will be apparent from the following detailed description of preferred embodiments of a milling insert according to the present invention in connection with the figures, wherein:

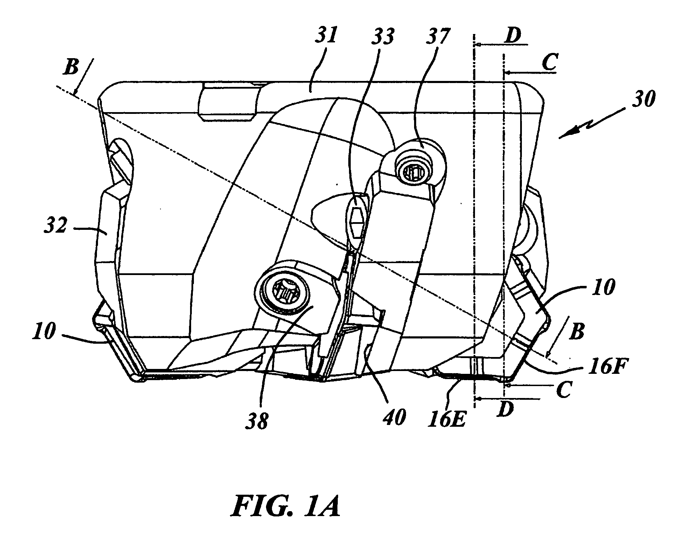

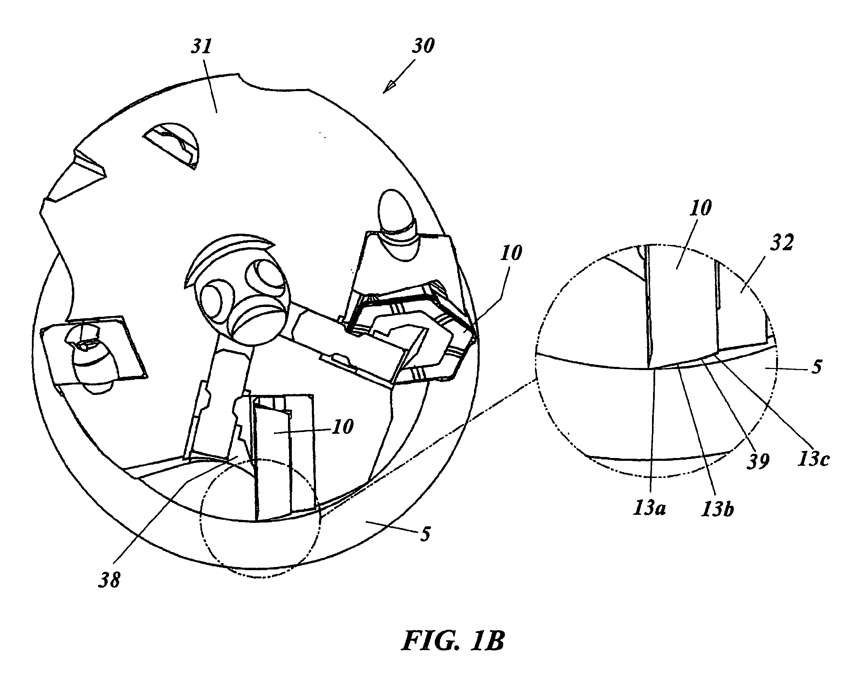

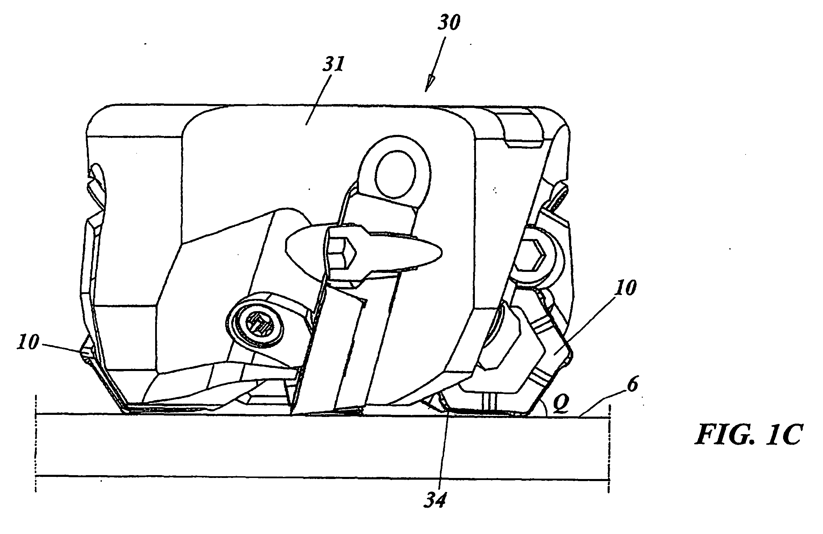

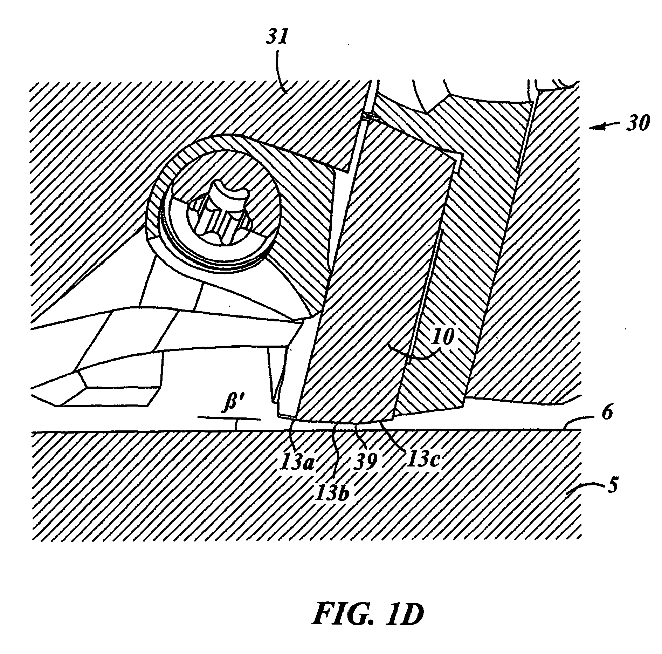

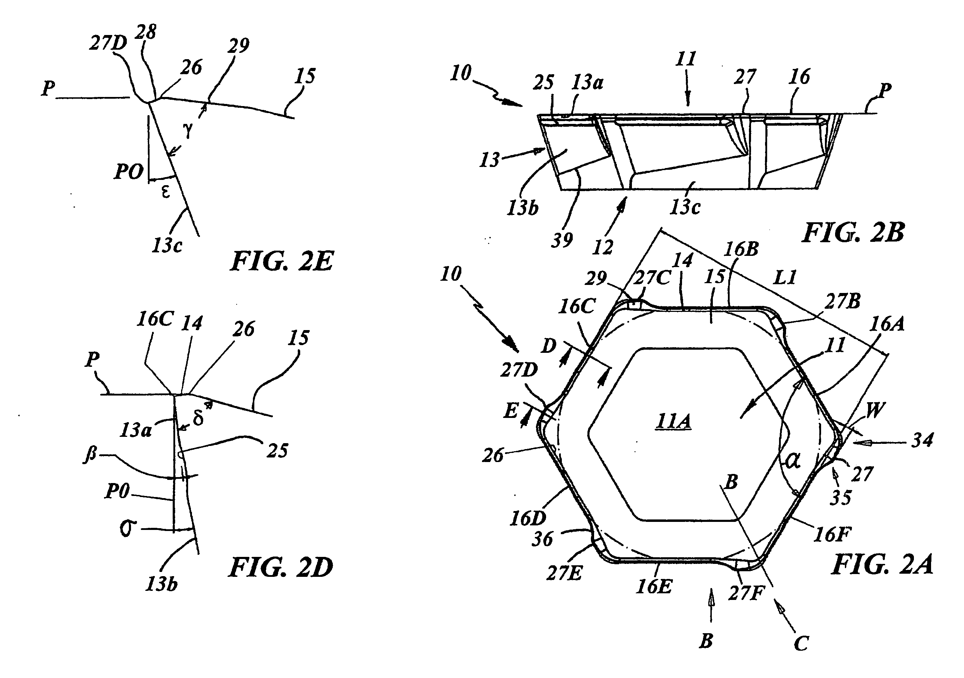

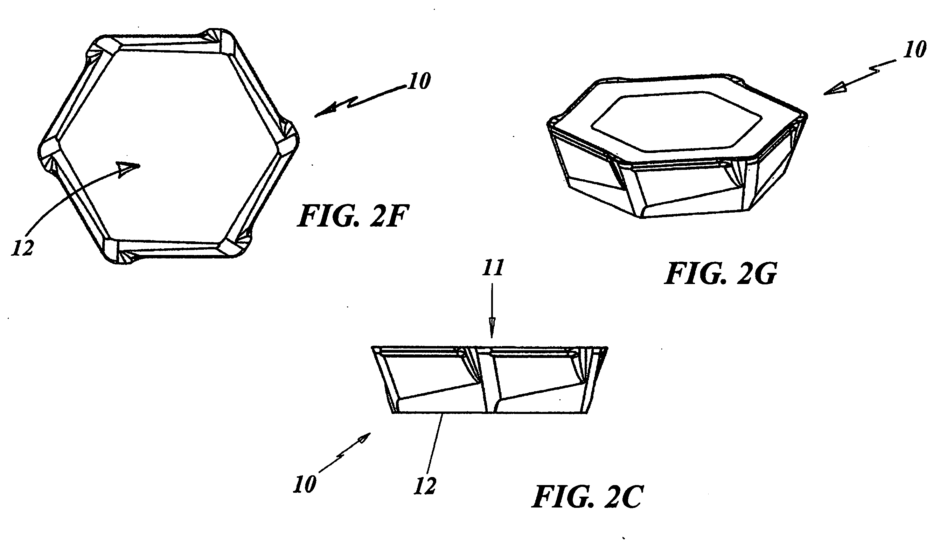

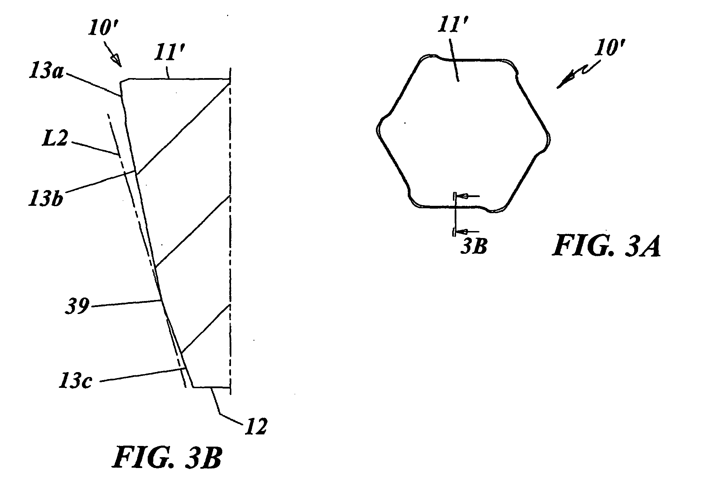

Fig. 1A shows an embodiment of a milling tool according to the present invention, in a side view. Fig. 1B shows a cross-section according to B in Fig. 1A in engagement with a work piece and a magnification of a part of the milling tool and the work piece. Fig. 1C shows a cross-section according to C in Fig. 1 A. Fig. 1 D shows a cross-section according to D in Fig. 1 A. Fig. 2A shows a plane view of a cutting insert according to the present invention. Figs. 2B and 2C show the cutting insert in a side views according to arrows B and C, respectively, in Fig. 2A. Fig. 2D shows a cross-section along the line D-D in Fig. 2A. Fig. 2E shows a cross-section along line E in Fig. 2A. Figs. 2F and 2G show the cutting insert in a bottom view and in a perspective view, respectively. Fig. 3A shows a plane view of an alternative cutting insert according to the present invention. Fig. 3B shows a cross-section along the line 3B in Fig. 3A.

### Detailed description of preferred embodiments of the invention

In Figs. 1A-1 D is shown a milling tool 30 according to the present invention foremost for rough milling, comprising a milling cutter body or holder 31 and a plurality of milling inserts 10 according to the present invention. The holder 31 has a plurality of adapters or cassettes 32 for receiving the cutting inserts. Each cassette has a cutting insert pocket, which comprises a primarily planar base surface 40 and two shoulders. The shoulders form an acute internal angle between each other for abutment against every other edge surface of the cutting insert. A through-going hole provided in the cassette 32 is provided next to the pocket for receiving a fastening screw 33 to secure the cassette in the holder 31 which is known per se. The cassette is adjustable in the axial direction with the assistance of a first wedge 37. The cassette is provided in the holder at a positive axial angle to provide for a favorable chip flow. A second wedge 38 is provided to hold the cutting insert 10 in the pocket. When the cutting insert is to be indexed a screw, which manages the second wedge 38, is unscrewn partly until the cutting insert can be drawn by hand radially outwardly and the cutting insert can be rotated in steps corresponding to 60° anticlockwise, such that a new secondary cutting edge 16E gets into position. Then the cutting insert is pushed into the pocket and the screw retightened. The cutting inserts 10 shall be located in the holder at a setting angle Q, see Fig. 1C, about 53 - 63°, for obtaining clearance for the cutting corner 34 next to the secondary cutting edge 16E of the cutting insert 10.

The cutting insert 10 shown in Figs. 2A to 2G has a substantially hexagonal basic shape and comprises an upper surface 11, a bottom surface 12 and an edge surface or clearance surface generally designated 13 and substantially connecting the upper surface 11 and the bottom surface 12. The cutting insert 10 has a positive geometry, that is the bottom surface 12 is smaller than the upper surface 11 for providing clearance from a work piece 5. The upper surface 11 comprises a first chip-upsetting surface 14 positioned at the periphery of the main cutting edge 16 of the cutting insert 10. In addition, the upper surface 11 comprises a first chip surface 15 which slopes inwardly and downwardly from the chip-upsetting surface 14. The surface 14 constitutes the most peripheral part of the upper surface 11. The intersection line of the first chip-upsetting surface 14 and the edge surface 13 forms the general cutting edge 16, which is defined by six substantially identical cutting edges 16A-16F. The chip surface 15 is concavely curved and runs inwardly from the chip-upsetting surface from a transition edge 26 to a central planar part 11A. The chip surface may alternatively have another design. Cutting corners 34 are provided in the region of the intersection between two adjacent edge surfaces 13. The upper parts of the cutting corners lie in a plane P. A plurality of projections or recesses can be formed in the chip surface 15 to reduce the transport of heat from the chip to the cutting insert.

Each two adjacent cutting edges 16 form an internal obtuse angle α, about 120°. Each cutting edge is substantially parallel in a side view and a bottom view with a corresponding part at the intersection between the edge surface 13 and the bottom surface 12.

The edge surface 13 comprises six segments. An upper area or a first edge surface 13a of each segment of the edge surface 13 below the main cutting edge 16 forms a first clearance angle β with a plane P0 oriented perpendicularly to the bottom surface 12 of the cutting insert (Fig. 2D). The clearance angle β is at least 5°. The six, essentially planar first edge surfaces 13a converge in direction towards the bottom surface 12. The upper area 13a connects to the chip-upsetting surface 14 at the main cutting edge 16A-16F. An elongated recess 25 connects with one long side to the upper area 13a. A radius of about 1 mm defines the recess 25. The other long side of the recess connects to a second area or a second edge surface 13b, which forms an even bigger angle σ with the plane P0 (Fig. 2D). The angle σ is at least 10°. The recess 25 runs parallel to the main cutting edge 16 from a concave portion 36 to the cutting corner 34 but not around the cutting corner.

A third area or third edge surface 13c connects to the second area 13b via a break, rounding or transition 39 where the angle is changed about 10°. That is, the transition 39 between the second edge surface 13b and the third edge surface 13c of the cutting insert 10 mounted in the holder 31 form a convex clearance surface as an impact protection, for the underlying main cutting edge 16 of the cutting insert, relative to the generated surface 6 of the work piece 5. The third edge surface 13c forms an angle ε of about 20° with the plane P0. The third edge surface 13c extends at the associated cutting corner 34 to a secondary cutting edge or a wiper edge generally designated 27, Fig. 3B. The cutting insert has a bottom surface 12 which defines a plane, and a line L2, which intersects said plane, touches only the external point 39 on the clearance surface. The secondary cutting edge 27 connects via a second chip-upsetting surface 28 to a second chip surface 29, which in turn connects to the first chip surface 15. The first chip surface 15 forms in this example an angle with the plane P of about 17° while the second chip surface 29 forms an angle of about 7° with the plane P. The second chip-upsetting surface 28 slopes more negatively than the first chip-upsetting surface 14. The cutting insert 10 has a first edge angle δ at the main cutting edge 16 and a second edge angle γ at the secondary cutting edge 27. The first edge angle δ is about 67° and the second edge angle γ is about 63°. Said chip-upsetting surfaces 14 and 28 connect to each other at the area of a bisector B of the cutting corner 34.

The secondary cutting edge 27 is provided at a protruding portion 35, which in a top view protrudes a greatest distance W from an imaginary extension line of the main cutting edge 16. The distance W is 0.5 - 1.0 mm. The portion 35 is asymmetrical relative to the bisector B of the cutting corner 34. The secondary cutting edge 27 diverges continuously in direction from the adjacent cutting corner 34, that is, from the imaginary extension line of the adjacent main cutting edge, for example 16F. A concave portion 36 (see Fig. 2A) is provided between the secondary cutting edge for example 27E and the trailing main cutting edge for example 16D. Said edge 16D is passive when the edge 27E is active, however the edge 16D is then susceptible to impacts from the work piece. The portion 35 is provided in the region of the intersection between two adjacent identical main cutting edges, for example 16D and 16E.

The distance between two diametrically opposed main cutting edges 16C and 16F for example is depicted by L1 in Fig. 2A. The distance L1 is the same for all combinations of diametrically opposed main cutting edges.

Fig. 3A shows a cutting insert 10' according to an alternative embodiment according to the present invention. The appearance of the upper of the surface 11' of the cutting insert 10' differs from the cutting insert 10, that is the lack of any peripheral chip surface 15. Consequently, the upper surface 11' is wholly planar and has cutting edges such as described above. The remainder of the cutting insert 10' is identical with the cutting insert 10.

By using the teachings of the present invention a cutting insert and a milling tool is provided which entail economically favorable cutting inserts with preferably more than four cutting edges where strong cutting corners 34 are combined with wiper edges 27 for producing fine surfaces. Consequently, the clearance surface 13b of the passive cutting edge 16E of the in the holder mounted cutting insert 10, 10' forms a negative angle β' with the generated surface 6 with the work piece 5, see Fig. 1 D. At rough milling with a such milling tool in a machine with poor stability the external point or line 39 of the cutting insert can abut against the work piece 5 when the secondary cutting edge 27 has passed the edge of the workpiece without damaging the underlying main cutting edge 16E.

Although the present invention has been described in connection with a preferred embodiment thereof, it is understood for the person skilled in the art that modifications not specifically described can be made without departing from the scope of the invention such as it is defined in the appended claims. For example it is possible to provide the cutting insert with a through-going hole for receiving a screw as an alternative to the shown clamp 38.

## Claims

1. A milling insert for milling having a substantially polygonal basic shape with substantially identical main cutting edges (16A-16F) along a transition between an upper surface (11;11') and an edge surface (13) of the milling insert (10;10'), said edge surface (13) forming a clearance surface of the milling insert, said upper surface (11;11') having a first chip surface (15), a first edge surface (13a) connecting to each said cutting edge and defining a first edge angle (δ) with the first chip surface (15), each said main cutting edge (16) having an associated secondary cutting edge (27) provided on a portion (35) protruding relative to the edge surface (13a) of an adjacent main cutting edge, wherein a concave portion (36) is provided between the secondary cutting edge (27e) and a trailing main cutting edge (16d),
**characterized in that** the clearance surface (13) is at least partly convexly shaped and functions as a protection for the adjacent main cutting edge of the cutting insert and **in that** the protruding portion (35) is provided in the region of intersection between two adjacent identical main cutting edges (16D,16E).

2. The milling insert according to claim 1,
**characterized in that** the cutting insert has a bottom side (12) which defines a plane, wherein a line (L2) which intersects said plane touches an external point (39) on the clearance surface, or **in that** the secondary cutting edge (27) of the portion (35) connects to a third edge surface (13c) which forms a second edge angle (γ) with an adjacent second chip surface (29), said second edge angle (γ) being smaller than the first edge angle (δ) for obtaining a greater clearance at the secondary cutting edge than at the main cutting edge and **in that** the cutting insert has more than four, preferably six main cutting edges (16A-16F).

3. The milling insert according to claim 1 or 2,
**characterized in that** a first chip-upsetting surface (14) is provided in connection to the main cutting edge (16) and **in that** a second chip-upsetting surface (28) is provided in connection to the secondary cutting edge (27), said chip-upsetting surfaces connecting to each other at a cutting corner (34).

4. The milling insert according to claim 2,
**characterized in that** the first edge angle (δ) is about 67° and the second edge angle (γ) is about 63° and **in that** respective pair of adjacent cutting edges (16) intersect and form a cutting corner (34) with a internal obtuse angle (α), preferably about 120°.

5. The milling insert according to according to any of the preceding claims, **characterized in that** an elongated recess (25) connects with a long side to the first edge surface (13a) and with another long side to a second edge surface (13b), which forms an even greater angle (α) with a plane (P0) perpendicular to a bottom surface (12) of the cutting insert.

6. A milling tool for milling of a work piece (5), said milling tool comprising a holder (31) and at least one milling insert according to claim 1, said holder having a fastening device (38) and a pocket, said milling insert (10;10') having a substantially polygonal basic shape and comprising more than four substantial identical main cutting edges (16).

7. The milling tool according to claim 6, **characterized in that** the secondary cutting edge (27) of the portion (35) connects to a second edge surface (13C) which forms a second edge angle (γ) with an adjacent second chip surface (29), said second edge angle (γ) being smaller than the first edge angle (δ) for obtaining greater clearance at the secondary cutting edge than at the main cutting edge.

8. The milling tool according to claim 7, **characterized in that** the second edge angle (γ) is about 63° and the first edge angle (δ) is about 67°.

9. The milling tool according to anyone of the claims 7-8,
**characterized in that** there exists a break (39) between a second planar edge surface (13c) and a third plane edge surface (13b).

## Patentansprüche

1. Fräseinsatz zum Fräsen mit einer im wesentlichen polygonalen Grundgestalt mit im wesentlichen identischen Hauptschneidkanten (16A-16F) längs eines Überganges zwischen einer oberen Fläche (11; 11') und einer Kantenfläche (13) des Fräseinsatzes (10; 10'), wobei die Kantenfläche (13) eine Freifläche des Fräseinsatzes bildet, die obere Fläche (11; 11') eine erste Spanfläche (15) hat; eine erste Kantenfläche (13a) sich an jede Schneidkante anschließt und mit der ersten Spanfläche (15) einen ersten Kantenwinkel (δ) bildet, jede Hauptschneidkante (16) eine zugeordnete sekundäre Schneidkante (27) hat, die auf einem Abschnitt (35) vorgesehen ist, der relativ zu der Kantenfläche (13a) einer benachbarten Hauptschneidkante heraussteht, wobei ein konkaver Abschnitt (36) zwischen der sekundären Schneidkante (27e) und einer nachlaufenden Hauptschneidkante (16d) vorgesehen ist
**dadurch gekennzeichnet, daß** die Freifläche (13) mindestens teilweise konvex geformt ist und als Schutz für die benachbarte Hauptschneidkante des Schneideinsatzes fungiert und daß der herausstehende Abschnitt (35) in dem Schnittbereich zwischen zwei benachbarten identischen Hauptschneidkanten (16D, 16E) vorgesehen ist.

2. Fräseinsatz nach Anspruch 1, **dadurch gekennzeichnet, daß** der Schneideinsatz eine Bodenseite (12) hat, welche eine Ebene bestimmt, wobei eine Linie (L2), welche die Ebene schneidet, einen äußeren Punkt (39) auf der Freifläche berührt oder daß die sekundäre Schneidkante (27) des Abschnittes (35) sich an eine dritte Kantenfläche (13c) anschließt, welche einen zweiten Kantenwinkel (γ) mit einer benachbarten zweiten Spanfläche (29) bildet, wobei der zweite Kantenwinkel (γ) kleiner ist als der erste Kantenwinkel (δ), um einen größeren Freiraum an der sekundären Schneidkante zu erhalten als an der Hauptschneidkante, und daß der Schneideinsatz mehr als vier, vorzugsweise sechs Hauptschneidkanten (16A-16F) hat.

3. Fräseinsatz nach Anspruch 1 oder 2, **dadurch gekennzeichnet, daß** eine erste Spanstörfläche (14) in Verbindung mit der Hauptschneidkante (16) vorgesehen ist und daß eine zweite Spanstörfläche (28) in Verbindung mit der sekundären Schneidkante (27) vorgesehen ist, wobei die Störflächen an einer Schneidecke (34) aneinander anschließen.

4. Fräseinsatz nach Anspruch 2, **dadurch gekennzeichnet, daß** der erste Kantenwinkel (δ) etwa 67° beträgt und der zweite Kantenwinkel (γ) etwa 63° beträgt und daß das entsprechende Paar benachbarter Schneidkanten (16) sich schneidet und eine Schneidecke (34) mit einem inneren stumpfen Winkel (α) bildet, vorzugsweise etwa 120°.

5. Fräseinsatz nach einem der vorhergehenden Ansprüche, **dadurch gekennzeichnet, daß** eine längliche Ausnehmung (25) sich mit einer langen Seite an die erste Kantenfläche (13a) anschließt und mit einer anderen langen Seite sich an eine zweite Kantenfläche (13b) anschließt, die einen noch größeren Winkel (σ) mit einer Ebene (P0) senkrecht zu einer Bodenfläche (12) des Schneideinsatzes bildet.

6. Fräswerkzeug zum Fräsen eines Werkstückes (5), wobei das Fräswerkzeug einen Halter (31) und mindestens einen Fräseinsatz nach Anspruch 1 aufweist, wobei der Halter eine Befestigungsvorrichtung (38) und eine Tasche hat und der Fräseinsatz (10; 10') eine im wesentlichen polygonale Grundgestalt hat und mehr als vier im wesentlichen identische Hauptschneidkanten (16) aufweist.

7. Fräswerkzeug nach Anspruch 6, **dadurch gekennzeichnet, daß** die sekundäre Schneidkante (27) des Abschnittes (35) sich an eine zweite Schneidfläche (13C) anschließt, die einen zweiten Kantenwinkel (γ) mit einer benachbarten zweiten Spanfläche (29) bildet, wobei der zweite Kantenwinkel (γ) kleiner ist als der erste Kantenwinkel (ö), um an der sekundären Schneidkante einen größeren Freiraum zu erhalten als an der Hauptschneidkante.

8. Fräswerkzeug nach Anspruch 7, **dadurch gekennzeichnet, daß** der zweite Kantenwinkel (γ) etwa 63° beträgt und der erste Kantenwinkel (δ) etwa 67° beträgt.

9. Fräswerkzeug nach einem der Ansprüche 7 bis 8, **dadurch gekennzeichnet, daß** es einen Absatz (39) zwischen einer zweiten ebenen Kantenfläche (13c) und einer dritten ebenen Kantenfläche (13b) gibt.

## Revendications

1. Plaquette de fraisage pour fraisage possédant une forme de base sensiblement polygonale avec des arêtes de coupe principales sensiblement identiques (16A à 16F) le long d'une transition entre une surface supérieure (11 ; 11') et une surface d'arête (13) de la plaquette de fraisage (10 ; 10'), ladite surface d'arête (13) formant une surface d'espace libre de la plaquette de fraisage, ladite surface supérieure (11 ; 11') possédant une première surface à copeau (15), une première surface d'arête (13a) se reliant à chaque dite arête de coupe et définissant un premier angle d'arête (δ) avec la première surface à copeau (15), chaque dite arête de coupe principale (16) possédant une arête de coupe secondaire associée (27) prévue sur une partie (35) saillante par rapport à la surface d'arête (13a) d'une arête de coupe principale adjacente, dans laquelle une partie concave (36) est prévue entre l'arête de coupe secondaire (27e) et une arête de coupe principale arrière (16d),
**caractérisée en ce que** la surface d'espace libre (13) présente une forme au moins partiellement convexe et sert de protection pour l'arête de coupe principale adjacente de la plaquette de coupe et **en ce que** la partie saillante (35) est prévue dans la région de croisement entre deux arêtes de coupe principales identiques adjacentes (16D, 16E).

2. Plaquette de fraisage selon la revendication 1, **caractérisée en ce que** la plaquette de coupe possède un côté inférieur (12) qui définit un plan, dans laquelle une ligne (L2) qui croise ledit plan touche un point externe (39) sur la surface d'espace libre, ou **en ce que** l'arête de coupe secondaire (27) de la partie (35) se relie à une troisième surface d'arête (13c) qui forme un second angle d'arête (γ) avec une seconde surface à copeau adjacente (29), ledit second angle d'arête (γ) étant inférieur au premier angle d'arête (δ) pour obtenir un espace libre plus important au niveau de l'arête de coupe secondaire qu'au niveau de l'arête de coupe principale et **en ce que** la plaquette de coupe possède plus de quatre, de préférence six, arêtes de coupe principales (16A à 16F).

3. Plaquette de fraisage selon la revendication 1 ou 2, **caractérisée en ce qu'**une première surface de refoulement de copeau (14) est prévue en association à l'arête de coupe principale (16) et **en ce qu'**une seconde surface de refoulement de copeau (28) est prévue en association à l'arête de coupe secondaire (27), lesdites surfaces de refoulement de copeau se reliant l'une à l'autre au niveau d'un angle de coupe (34).

4. Plaquette de fraisage selon la revendication 2, **caractérisée en ce que** le premier angle d'arête (d) mesure environ 67° et le second angle d'arête (γ) mesure environ 63° et **en ce qu'**une paire respective d'arêtes de coupe adjacentes (16) se croisent et forment un angle de coupe (34) avec un angle obtus interne (a), mesurant de préférence environ 120°.

5. Plaquette de fraisage selon l'une quelconque des revendications précédentes, **caractérisée en ce qu'**un évidemment allongé (25) se relie avec un côté long à la première surface d'arête (13a) et avec un autre côté long à une deuxième surface d'arête (13b), qui forme un angle encore plus important (s) avec un plan (P0) perpendiculaire à une surface inférieure (12) de la plaquette de coupe.

6. Outil de fraisage pour le fraisage d'une pièce (5), ledit outil de fraisage comprenant un support (31) et au moins une plaquette de fraisage selon la revendication 1, ledit support possédant un dispositif de fixation (38) et une poche, ladite plaquette de fraisage (10 ; 10') présentant une forme de base sensiblement polygonale et comprenant plus de quatre arêtes de coupe principales sensiblement identiques (16).

7. Outil de fraisage selon la revendication 6, **caractérisée en ce que** l'arête de coupe secondaire (27) de la partie (35) se relie à une deuxième surface d'arête (13C) qui forme un second angle d'arête (γ) avec une seconde surface à copeau adjacente (29), ledit second angle d'arête (γ) étant inférieur au premier angle d'arête (δ) pour obtenir un espace libre plus important au niveau de l'arête de coupe secondaire qu' au niveau de l'arête de coupe principale.

8. Outil de fraisage selon la revendication 7, **caractérisée en ce que** le second angle d'arête (γ) mesure environ 63° et le premier angle d'arête (d) mesure environ 67°.

9. Outil de fraisage selon l'une quelconque des revendications 7 et 8, **caractérisée en ce qu'**il existe une rupture (39) entre une deuxième surface d'arête plane (13c) et une troisième surface d'arête plane (13b).
